(19)

**Europäisches Patentamt**
**European Patent Office**
**Office européen des brevets**

(11) **EP 3 853 963 B1**

(12) **EUROPEAN PATENT SPECIFICATION**

(45) Date of publication and mention
of the grant of the patent:
**07.05.2025  Bulletin 2025/19**

(21) Application number: **19778602.3**

(22) Date of filing: **19.09.2019**

(51) International Patent Classification (IPC):
*H02J 3/30* (2006.01)     *H02K 7/02* (2006.01)
*H02K 19/10* (2006.01)     *H02K 19/24* (2006.01)

(52) Cooperative Patent Classification (CPC):
**H02J 3/30; H02K 7/025; H02K 19/103;**
**H02K 19/24;** F16F 15/315; Y02E 60/16

(86) International application number:
**PCT/GB2019/052636**

(87) International publication number:
**WO 2020/058716 (26.03.2020 Gazette 2020/13)**

(54) **ENERGY STORAGE SYSTEM**

ENERGIESPEICHERSYSTEM

SYSTÈME DE STOCKAGE D'ÉNERGIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **19.09.2018   GB 201815260**

(43) Date of publication of application:
**28.07.2021   Bulletin 2021/30**

(73) Proprietor: **Aartech Solonics UK Ltd.**
**London WC2H 9JQ (GB)**

(72) Inventor: **PRASSINOS, George**
**Guildford Surrey GU1 3HW (GB)**

(74) Representative: **Dennemeyer & Associates S.A.**
**Postfach 70 04 25**
**81304 München (DE)**

(56) References cited:
WO-A1-2016/191686     WO-A1-2018/089548
WO-A1-95/07193     CN-A- 108 321 978
US-A- 6 029 538     US-A- 6 087 753
US-A1- 2003 102 718     US-A1- 2014 010 652
US-A1- 2018 097 430     US-B1- 6 794 776

**Description**

The present invention relates to an energy storage system, more particularly a flywheel energy storage system for particular use in load balancing for an electrical grid and support for electric vehicle charging infrastructure.

In conventional power systems and grids, supply must meet demand on a second-by-second basis. To avoid service interruption, unbalanced systems, and an increase in the cost of energy and unnecessary curtailment of renewable energy-based systems, EESS (electrical energy storage systems) will play an essential role in the management of energy in the future.

Power generators need to accomplish two essential functions. The first is to provide the base-load: the minimum energy requirement on a half-hourly basis. Forecasting algorithms and historic data can be used to anticipate the energy demand. The second is frequency regulation via services such as FFR (firm frequency response) procured by the National Grid. This service is of high value to the grid as it balances the second-by-second over/under supply of power. For this service, the priority is power over energy as a high power reactive load for short to medium durations is required. Other services are then procured based on a duration/energy requirement.

In today's market, the baseload is provided by nuclear and coal generation, due to its slow response time and inability to react quickly to changes in demand. Gas-fired generation are more flexible, and along with pumped hydro storage and renewable technologies, make up for the instantaneous load regulation. A main requirement of such systems is of course a permanent and constant availability.

The main concern with renewable energy sources such as wind and solar is that they cannot guarantee permanent availability due to their dependence on weather conditions. This variable and unpredictable nature can lead to a severe curtailment of renewable energy-based systems. In 2016, over 1 TWh of wind generation was curtailed due to an inability to store and manage the energy generation efficiently. In this context, EESSs are essential if renewable energy sources are ever to find their role as a critical player in the world of robust grids.

A particular type of energy storage system is a flywheel energy storage system (FESS), in which energy is stored as kinetic energy by a rotating flywheel. Challenges of designing current state of the art grid-connected FESS schemes relate to the presence of a separate motor/generator (M/G) and an outer containment system, needed to handle the high destructive forces arising in case of a fault. The two-bodied scheme can result in a quite bulky and heavy arrangement, due to the presence of numerous components. Furthermore, since flywheels are ideally vacuum-operated, an added problem lies in the presence of a rotating vacuum-sealed joint between the M/G and the main body, which represents one of the main sources of inefficiency.

WO 2016/191686 A1 discloses a mobile mining machine including a plurality of traction elements, a plurality of motors, a power source in electrical communication with the plurality of motors, and an energy storage system in electrical communication with the plurality of motors and the power source. Each of the motors is coupled to an associated one of the plurality of traction elements. Each of the motors is driven by the associated traction element in a first mode, and drives the associated traction element in a second mode. The energy storage system includes a shaft, a rotor secured to the shaft, a stator extending around the rotor, and a flywheel coupled to the shaft for rotation therewith. In the first mode, rotation of the motors causes rotation of the flywheel to store kinetic energy. In the second mode, rotation of the rotor and the flywheel discharges kinetic energy to drive the motors.

WO 95/07193 A1 discloses a kinetic energy storage system which utilises a flywheel with a motor generator to store energy. A flywheel rotor is located in an elongate housing which forms at least part of a rigid framework. In use on a vehicle the framework provides a chassis for the vehicle and the vehicle may be powered from the flywheel. The flywheel rotates at high speed in a vacuum and the motor generator could be an inverted switched reluctance motor generator optionally providing a magnetic bearing function.

US2014/10652 A1 discloses an energy storage system according to the preamble of claim 1, forming part of a hybrid power train for an aircraft.

Aspects and embodiments of the present invention are set out in the appended claims.

These and other aspects and embodiments of the invention are also described herein.

According to an aspect of the invention, there is provided an energy storage system, comprising: a switched reluctance motor comprising a rotor and a stator; wherein the rotor is arranged to be capable of acting as a flywheel for storing energy; a casing enclosing the rotor and stator; wherein the rotor is supported for rotation on the casing; and a base arranged to support the casing; wherein the energy storage system is arranged such that, in use, the axis of the rotor is generally horizontal.

By providing a horizontal axis for the rotor/flywheel, and thereby a vertically-orientated flywheel, the system may take up less space on the ground (i.e. the system has a smaller 'footprint' than it would have if mounted with a horizontal axis), meaning the usage of available space can be improved. For example, a plurality of flywheel systems may be provided in an array, wherein the small form factor may be beneficial in allowing a larger number of such systems to be provided in a given area (thereby increasing the amount of energy that can be stored by the array). Furthermore, by providing the system on a horizontal axis, it may be easier to re-lubricate the bearings in-situ (since there is no need to reach above and below the rotor).

In addition, providing a horizontal axis for the flywheel rather than a vertical axis can improve stability if used within a vehicle. Vertically-orientated flywheels may cause undesirable gyroscopic effects, which need to be controlled. A typical way to mitigate this is to provide two oppositely-rotating flywheels to balance out external torque. However, this requires the positioning and the angular velocity of the flywheels to be matched. The present system may allow only a single flywheel to be used, without generating gyroscopic effects of a magnitude and direction to affect vehicle handling.

Preferably, the rotor is arranged within the stator. That is, the stator may be arranged around the rotor. The stator may be in the form of a hollow cylinder, while the rotor may be a cylindrical shape, optionally conforming to the inner surface of the stator. The rotor may be arranged to concentrically align with the stator. The rotor may be configured to be rotatable within the stator.

Preferably, the rotor and the stator have the same depth. The depth is defined as the dimension parallel to the central axis of the cylindrical shape (i.e. parallel to the rotor axis). The depth is perpendicular to the diameter. Preferably, the depth of the rotor is less than the diameter of the rotor. Preferably, the depth of the stator is less than the diameter of the stator. For example, the depth of the rotor and/or the stator may be less than half the diameter of the rotor and/or the stator, respectively. Preferably, the casing has a depth less than a diameter of the casing. For example, the depth of the casing may be less than half the diameter of the casing. This arrangement can help provide a small footprint as described herein. Preferably, the base has a depth less than a width of the base, and more preferably less than the width of the casing.

In addition, the use of a switched reluctance motor (SRM) design may allow for a system to be provided without magnets or rare earth metals. In turn, this may allow the total number of components required can be reduced. Furthermore, the lack of a separate flywheel component significantly reduces the capital cost and component count of the system by obviating the need for many of the non-metallic components of known systems.

Preferably, the casing is generally cylindrical thereby to conform to the shape of the rotor and stator. On a circular face of the casing, a chord defined by the intersections of the casing and the base may be greater than the radius of the circular face and less than the diameter of the circular face.

The casing may be partially recessed into the base. A width of the base may be greater than a width of the part of the casing that is recessed into the base, the width of the base being perpendicular to the axis of the rotor. The base may be shaped as part of a triangular prism being cut-off by the casing. Optionally, a depth of the base does not extend beyond a depth of the casing, the depth of the casing being parallel to the axis of the rotor, preferably wherein a depth of the casing is defined by the length of an axle of the rotor.

The casing may comprise a plurality of fins on an outer surface for assisting heat dissipation. The casing may be configured to contain parts of the rotor within the casing in the event of a failure in use. The casing may be evacuated for use.

Preferably, the base is arranged to be mounted on a foundation in use. The casing may have a diameter of between 600 mm and 1,400 mm, preferably between 900 and 1,100 mm, more preferably between 960 mm and 1,000 mm.

The rotor may be supported for rotation on an axle which rotates on rolling element bearings provided on the casing. The bearings may be deep groove radial hybrid bearings. A compressible member may be provided between the bearings and the axle.

The stator may comprise a plurality of electrical windings positioned around the rotor. The rotor may comprise more than 6 stator poles, preferably at least 8 rotor poles, more preferably at least 10, still more preferably at least 12, most preferably at least 14. Preferably, the switched reluctance motor has a 16/14 configuration.

The rotor and stator may be each formed from a plurality of laminations, preferably wherein each of the plurality of laminations has a width of 1 mm or less. At least an outer region of the rotor may be made from a ferromagnetic material.

According to an aspect of the invention, there is provided energy storage installation, comprising a plurality of energy storage systems as described herein. The energy storage installation may further comprise one or more power electronics units, each configured to control the operation of at least two energy storage systems. The energy storage installation may further comprise means for converting alternating current (AC) into direct current (DC) thereby to allow import of AC from an electrical grid to the installation. The energy storage installation may further comprise means for converting direct current (AC) into alternating current (DC) thereby to allow export of AC from the installation to an electrical grid. The energy storage installation may further comprise a master controller for controlling the operation of the energy storage systems.

According to another aspect of the invention, there is provided an energy storage system, comprising: a switched reluctance motor comprising a rotor and a stator; wherein the rotor is arranged to be capable of acting as a flywheel for storing energy; a casing enclosing the rotor; wherein the casing includes bearings for supporting the rotor; and a base arranged to support the casing from underneath; wherein the energy storage system is arranged such that, in use, the axis of the rotor is generally horizontal.

According to another aspect of the invention, there is provided an energy storage system, comprising:

a switched reluctance motor comprising a rotor and a stator; wherein the rotor is arranged to be capable of acting as a flywheel for storing energy; a casing enclosing the rotor and stator; wherein the rotor is supported for rotation on the casing; and a base arranged to support the casing; wherein the rotor comprises more than 6 stator poles, preferably at least 8 rotor poles, more preferably at least 10, still more preferably at least 12, most preferably at least 14. Preferably, the switched reluctance motor has a 16/14 configuration.

In general, the present invention may involve integrating a flywheel into a switchreluctance motor (SRM) to allow for more efficient flywheel energy storage. The rotor component may act as the flywheel that stores the energy. This is intended to balance supply and demand on the electrical grid, for example at a utility level. In one example, an application may be to balance the frequency of the grid - 50 Hz in the UK and most worldwide territories, and 60 Hz in the US. The use of the system may vary with the demands of the electrical grid. As energy is generated from intermittent generators (e.g. renewable generators) excess energy can be imported by the flywheels. If the generation output suddenly drops (e.g. from a drop in wind generation) the energy stored by the flywheels can be exported and used to balance the grid for short to medium durations.

Accordingly, the present invention re-organizes the entire structure of a typical FESS by integrating both the M/G and inertia functions into the rotor body and incorporating the stator in the outer containment, thus realising a simple, one-bodied solution. This concept may have the added benefit of simplifying the mechanical structure and removing all the low-inertia rotating parts (e.g. transmission joints), thus reducing the overall component count.

The invention extends to methods, systems and apparatus substantially as herein described and/or as illustrated with reference to the accompanying figures.

Any feature in one aspect of the invention may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

As used herein, the terms 'rotor' and 'flywheel' should be understood to be synonymous when used in the context of descriptions of the present invention (but not in the context of descriptions of any known systems, where these are generally separate components).

As used herein, the term 'generally horizontal' (when used in the context of an axis) preferably connotes an angle of between -30° and 30° with reference to a surface on which a system is mounted; more preferably between -20° and 20°; yet more preferably between -10° and 10°; still more preferably -5° and 5°; and most preferably -1° to 1°.

As used herein, the term 'approximately' preferably connotes an error margin of less than 10%; more preferably less than 5%; yet more preferably less than 1%.

It should also be appreciated that particular combinations of the various features described and defined in any aspects of the invention can be implemented and/or supplied and/or used independently.

The invention will now be described, purely by way of example, with reference to the accompanying drawings, in which:

Figure 1 shows an example embodiment of the energy storage system of the present invention;

Figure 2a shows cross-sectional views of an example deep groove radial bearing and an example angular contact bearing;

Figure 2b shows a side view of an example shaft and bearing arrangement assembled in the energy storage system;

Figure 3 shows the assembled energy storage system;

Figure 4a shows an example of a rotor of the system;

Figure 4b shows an example of a lamination of the rotor;

Figure 5a shows an example of a stator of the system;

Figure 5b shows an example of a lamination of the stator;

Figure 6a shows simulation results of a section of a rotor which has failed;

Figure 6b shows simulation results of a lamination of a rotor which has failed;

Figure 7 shows an example installation of an array of energy storage systems; and

Figure 8 shows an example schematic view of an array of energy storage systems and supporting componentry.

Specific Description

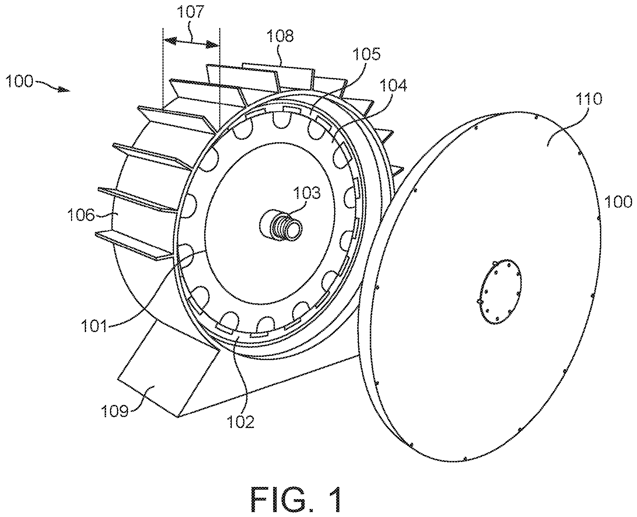

Figure 1 shows an energy storage system 100 comprising a switched reluctance motor (SRM) comprising a rotor 101 and a stator 102 (including windings, not shown), wherein the rotor 101 is arranged to be capable of acting as a flywheel for storing energy. The motor is arranged such that, in use, the axis of the rotor is generally horizontal. The system comprises an axle 103 (also referred to as a 'stub axle' or 'shaft') that defines the axis of the rotor. The axis of the rotor is perpendicular to the plane of the rotor such that the rotor 101 rotates about the axis of the rotor.

As is common with motor designs, the rotor 101 may be generally cylindrical in shape, with a generally circular cross-section, and the stator 102 may be a hollow cylinder configured to receive the rotor 101 therein. The rotor 101 may be disposed within the inner cylindrical surface of the stationary stator 102, and configured to rotate about the axis of the rotor. For good magnetic coupling, the radial periphery of the rotor is in close proximity to the windings of the stator. The system 100 further comprises power electronics and control systems for controlling the operation of the system 100.

In a switched reluctance motor, when a current is supplied to stator windings and they become energised, the windings form a stator pole. When stator windings are energised, the corresponding rotatable rotor poles become aligned with the energised stationary stator poles. This can be used to control the rotation of the rotor. In use, if an electric current is supplied to a pair of stator windings which are not aligned with poles on the rotor, the rotor experiences a torque. By controlling the electric currents supplied to the stator windings relative to the rotor angular position, the motor can be driven in either direction of rotation, or can be arranged to generate electrical power. By controlling the operating speed of the rotor, the relevant energy imported to or exported from the system can be controlled.

The rotor 101 comprise a plurality of protruding regions 104 extending radially outwards. The protruding regions 104 form the poles of the rotor 101. At least the protruding regions 104 of the rotor 101 are made from a ferromagnetic material such as steel. In some examples, the entirety of the rotor 101 is made from a ferromagnetic material. In other examples, only the protruding regions 104 or an outer region of the rotor 101 is made from a ferromagnetic material. The protruding regions 104 are equally spaced around the circumference of the rotor 101. As shown in Figure 1, the rotor 101 comprises 14 rotor poles. The stator 102 surrounds the rotor 101. The stator 102 comprises a plurality of protrusions 105 around its inner cylindrical surface. In use, each protrusion 105 includes an electrical winding, forming the poles of the stator 102. The windings are connected directly to a power converter for the system 100. As shown in Figure 1, the stator 102 comprises 16 windings forming 16 stator poles. This forms a switched reluctance motor with a 16/14 configuration.

The SRM acts as a motor when power is transferred to it, and acts as a generator when power is transferred away from it. As is known, a SRM is a stepper motor with an unequal number of salient rotor and stator poles. There are no windings or permanent magnets on the rotor. The SRM power electronics further comprises a plurality of gate drivers to power the SRM. The gate drivers provide a high current drive to switches such as IGBTs (Insulated Gate Bipolar Transistors). In other examples, field effect transistors such as MOSFETs or thyristors can be used instead of IGBTs.

An SRM has a number of specific strengths that make it well suited for the application at hand. In particular, the simple and robust rotor structure permits its use as a source of inertia (i.e. as a flywheel) without the need for external sources and complications (i.e. PMs, rotor bars or field coils). The use of an SRM may also allow for the system to be manufactured at a cheap capital cost, as PMs or rotor bars mean added cost from both a material and from a manufacturing perspective.

The design of the SRM of the system is influenced by the need to use the rotor as a flywheel for storing energy. The kinetic energy stored ($E_K$) in a flywheel is proportional to the polar moment of inertia ($J$) and the difference between the maximum and minimum square of the rotational speed ($\omega_{max}$ and $\omega_{min}$), as shown in (1):

$$E_K = \frac{1}{2} J \left( \omega_{max}^2 - \omega_{min}^2 \right) \qquad (1)$$

The faster the flywheel is able to rotate, the more energy it can store. The present system generally aims to store a large amount of energy. For example, the system may store above 15 kWh between 0 and approximately 16,000 rpm. Such power storage properties allow the system to act as an effective energy store, in particular for use in load balancing.

A high speed ratio (i.e. the ratio of the maximum and minimum rotational speed) of X = 7.5 is desired in order to obtain the desired power storage properties. Surface Mounted Permanent Magnet (SPM) machines offer a very poor speed ratio (X = 2), Interior Permanent Magnet (IPM) machines and Induction Motors (IM) offer a speed ratio of about 4, while Synchronous Reluctance (SynRel) machines can achieve speed ratios of up to 6. Most SRMs achieve speed ratios of up to 4. SRMs achieving speed ratios as high as required are not a common occurrence, and so a new SRM design is required.

A typical design for switched reluctance motors is a 6/4 configuration, with 6 rotor poles and 4 stator poles, used with three-phase power. In many applications, the use of more than a 6/4 configuration is unnecessary and adds additional cost and complexity in terms of control electronics and power electronics. In particular, by increasing the number of poles, the amount of switching required is increased which is generally undesirable in traditional SRMs, at least because electrical noise is significantly increased.

However, in the present system, where the rotor itself is used for flywheel energy storage, providing a higher number of poles is generally desirable to allow the system to achieve a high speed ratio. In particular, providing a high number of phases (corresponding to a high number of poles) reduces the torque that each phase needs to provide, resulting in a smaller flux and a smaller pseudo-back e.m.f. (electromotive force) at high speeds, which may improve the performance of the system. Reducing torque is particularly important in light of the large size and weight of the flywheel. Accordingly, in the present system a 16/14 configuration is used (i.e. a configuration having 16 rotor poles and 14 stator poles). In this case, 8-phase power is used. The high-power input and output of the flywheel is dependent on the number of phases and the IGBTs which can share the load. For example, for a required torque of 240 Nm, if a 6/4 configuration is used, each phase must be designed for the full 240 Nm torque. However, in the 16/14 configuration, four phases are capable of conducting at the same instant, such that each phase can be designed for 60 Nm (one quarter of the overall torque).

The physical size of the flywheel in the present system (which is relatively large thereby to store a large amount of energy) may also promote the use of a configuration having a relatively high pole count for the purposes of control. If the common 6/4 configuration was used, the system would be less controllable and might experience higher vibration (which would be detrimental to the operational life of the machine) as a result of the large torque that each phase needs to provide in order for the rotor to rotate. The use of more poles allows for more refined control of the rotation of the rotor.

A 16/14 configuration may greatly aid the design compared to other configurations such as a 6/4 motor. The geometry of the design such as the particular angles and pole lengths of the present system may maximise the efficiency of the system for large-scale energy storage purposes. Furthermore, torque ripple is decreased with an increase in pole count, and hence the system performance is increased.

The system 100 further comprises a casing 106 (or 'chassis'), which encloses the rotor 101 and stator 102. In some cases, the stator 102 may be coupled to the casing 106. The casing 106 is configured such that a width of the casing 107 is parallel to the axis of the rotor. The width of the casing 107 is configured such that the width of the rotor 101 and the stator 102 is enclosed within the casing 106. For example, the casing 106 may be generally cylindrical, or comprise a cylindrical element around the outer surface of the stator 102, such that it conforms to the shape of the stator 102 (and the rotor 101 within the stator 102). The casing 106 comprises a cover 110 for each side of the casing, the cover being generally circular and extending over the face of the rotor 101. The cover 110 is be configured to engage a face of the casing 106 thereby to close the generally cylindrical shape formed by the casing 106, such that the casing 106 is sealed in use.

During assembly of the casing 106, a vacuum pump and vacuum seals are used to seal the interior from the exterior. Therefore, the sealed casing 106 is evacuated in use such that the rotor 101 is operable under a vacuum. As such, the space around the rotor 101 is evacuated such that the rotor 101 is free to rotate under reduced friction. Once the system is installed on site, vacuum losses may occur over its lifetime, and as such a backup vacuum pump may be present "on site" (i.e. the location where the system is used) and connected to the system in order to compensate for any vacuum losses or deterioration in vacuum quality. The vacuum minimises frictional forces acting on the rotor 101, and reduces viscous drag between the rotor 101 and the stator 102.

Windage losses during rotation will be proportional to the rotational speed of the rotor cubed - hence, a suitable vacuum may be used to maintain efficiency and store a viable quantity of energy.

The casing 106 comprises bearings for supporting the rotor 101 (not shown in Figure 1). The bearings are mounted in the centre of each of the covers 110, such that the ends of the axle 103 of the rotor 101 locate with and engage with the bearings when each of the covers 110 is mounted to the rest of the casing 106. The bearings are provided in order to minimise friction during rotation. The rotor 101 is only supported by bearings (i.e. noncontact supports) and as such can rotate with very low frictional losses, especially in combination with an evacuated interior region. A compressible member (not shown) such as an O-ring or compressible gasket is provided between the cover 110 and the axle 103. Once the system is sealed under vacuum, the cover 110 pushes against and compresses the O-ring. The cover 110 is secured to the casing 106 by fastening means such as screws. A plurality of screws is used to secure the cover 110 by screwing on the leads. The bearings are rotating element bearings, more specifically deep groove radial bearings.

The cover 106 may be removed from time to time for essential repair or maintenance. In this case, the O-ring is replaced, and the vacuum is re-introduced before operation starts again (for example by use of a vacuum back-up pump).

As the flywheel is supported in a vertical plane, the axis of the rotor is generally horizontal in use. This may reduce the stress on the bearings over time and may thereby increase their lifetime. In certain known systems, flywheels are conversely designed having vertical axes and are supported for rotation on angular contact bearings, or in some cases magnetic bearings. Magnetic bearings may be prohibitively expensive for many applications, and hence angular contact bearings are often used. However, in the present system, the flywheel may be arranged having a horizontal shaft, allowing the use of deep groove radial bearings.

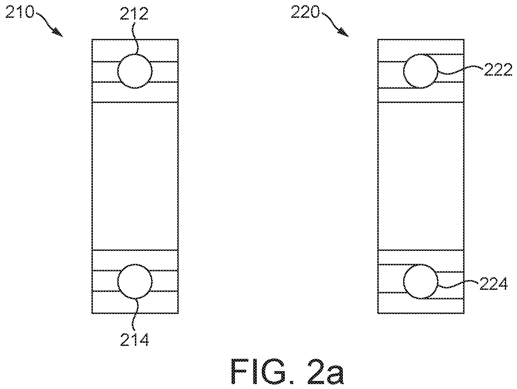

Figure 2a shows cross-sectional views of an example deep groove radial bearing 210 and an example angular contact bearing 220. The angular contact bearing 220 comprises one or more rolling elements 222 which are arranged by contact surfaces 224 to rotate at an oblique angle relative to the axis of any shaft supported by the bearing, thereby to provided axial support to the shaft, allowing use of these bearings in the vertical case. Deep groove radial bearings 210 cannot be used in the vertical case as they do not provide axial support, since the rolling elements 212 and contact surfaces 214 are arranged to support radial loads only.

As the skilled person would appreciate, deep groove radial bearings 210 have a lower coefficient of friction (approximately 25% less) than angular contact bearings 220 that are used in horizontal arrangements, due to increased slip of the rolling elements 222 as a result of the shape of the contact surface 224. The design of the cage of the bearing 220 and the fact that the angular contact bearing 220 distributes load onto all rolling elements 222 (rather than approximately one third of the roiling elements 212 present in the bearing, as in deep groove radial bearings 210) may be further reasons for the lower coefficient of friction of deep groove radial bearings 210 relative to angular contact bearings 220.

The use of deep groove radial bearings 210 in the system may thereby improve the longevity of the bearings, thereby reducing the regularity at which bearings need to be maintained and/or replaced. This may reduce the downtime of the system - as will be appreciated, the system generally must be completely spun down for maintenance, requiring that energy is stored elsewhere. Accordingly, minimising downtime of the system is an important design consideration.

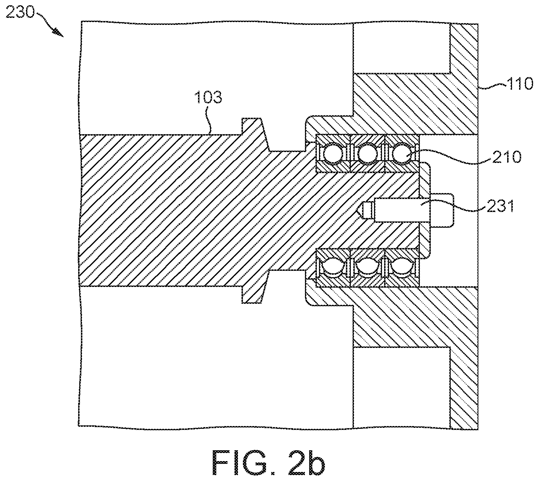

Figure 2b shows bearings assembled in a system 100 with a cover 110 in place. In particular, the cover 110 shown in Figure 1 is assembled with axle 103, also shown in Figure 1. The deep groove bearings 210 (shown in Figure 2a) are provided between the axle 103 (specifically, a thin end portion of the axle) and a flange 112 extending from the cover 110. In other examples, the bearings 210 may be the same as angular contact bearings 220 shown in Figure 2a, or they may be magnetic bearings.

The axle 103 is held in place in the cover 110 by pin 231 in order to hold the rotor 101 relative to the casing 106 and the rest of the system 100. As described above, the bearings 210 are provided to facilitate rotation of the axle 103 and hence the rotor 101 relative to the cover 110.

Referring again to Figure 1, the casing 106 further comprises heat dissipation means 108. For example, heat dissipation means 108 may comprise fins, as shown in Figure 1, configured to increase the effective surface area of the casing 106 to assist in the dissipation of heat from the motor. In some examples, other heat dissipation 108 means such as heat sinks or heat pipes may be provided.

The system 100 comprises a base arranged underneath the casing for support. The casing is entirely supported from underneath by the base, which may assist in minimising the 'footprint' of the system. The base 109 is shaped generally as (part of) a triangular prism, into which the cylindrical casing is partially recessed (thereby to cut off the top part of the triangular prism shape of the base). The partial recession of the casing into the base lowers the centre of gravity of the system. The base 109 does not extend beyond the depth of the casing 107 (i.e. the dimension parallel to the shaft 103), thereby to minimise the 'footprint' of the system. The underside of the base 109 is however wider than the portion that intersects with the casing 106, such that a triangular surface extends between the edge of the underside of the base 109 and the edge of the portion of the base 109 meeting the casing 106. Only a portion of the casing 106 sits on the base 109 - the portion sitting on the base 109 may be defined by a chord of the cover 110 (extending between points on the edge of the casing 106 which meet the base 109). This chord is generally longer than the radius of the cover 110, but shorter than the diameter of the cover 110. The dimensions of the base 109 are generally selected to minimise the footprint of the system 100 and material usage while ensuring that an effective base 109 capable of supporting the motor in use (and in particular mitigating against toppling) is provided.

The base 109 is configured to support the casing 106 and hence the rotor 101 and stator 102 of the motor in a vertical orientation. Thereby the base 109 supports the axis of the rotor at a generally horizontal axis when the base is horizontal, for example when it rests on a horizontal surface. The system 100 may be arranged to be free-standing for use, but is preferably 'dug in' to a further support to increase the stability of the system. For example, the system may be mounted on a concrete platform and/or may be bolted to a foundation. In a particular example the system 100 is bolt mounted on a reinforced steel concrete floor with concrete bolts to provide stability and to mitigate any toppling problems.

In some examples the base 109 may be coupled to the casing 106, for example it may be made from the same extrusion as the casing 106. In other example, the base is a separate component, onto which the casing is mounted.

The system 100 also comprises an encoder (not shown) for monitoring the angular position of the axle 103, where the encoder is provided in communication with the control circuitry. Where a 16/14 configuration (or another configuration having a high pole count) is used, the angular position of the shaft which retains the flywheel must be known to a reasonably high accuracy for the purposes of control (since the windings are located relatively close together). This precludes the use of low cost optical rotary encoders. Instead, custom-sized encoders, such as magnetic incremental encoders must be used. For example, custom magnetic incremental encoders (such as those manufactured by Pepperl+Fuchs) may be used to achieve an angular resolution of less than 0.01°. The encoder is directly attached to the axle 103 and is configured to transmit measurements of angular position to a controller (such as a digital signal processor (DSP) controller), which performs signal processing on data received from the encoder. The controller then informs a main or master controller, such as a field-programmable gate array (FPGA) controller, of the position of the rotor 103.

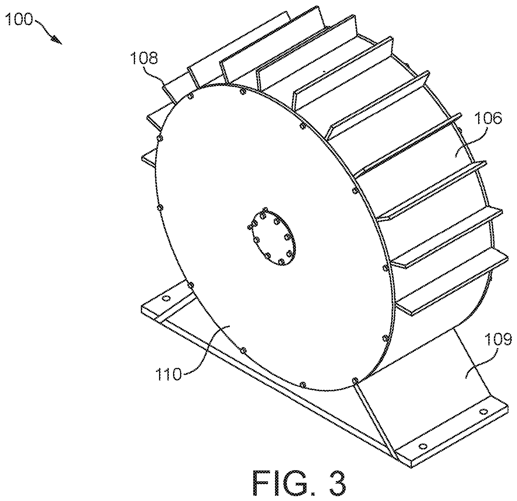

Figure 3 shows the assembled energy storage system 100. The assembled system has a total height of approximately 1105 mm (including the fins 108), a total length of approximately 1115 mm, and a total width of approximately 430 mm. The casing 106 has a total diameter of approximately 980 mm. As will be appreciated, the dimensions of the system 100 are primarily dictated by the size of the rotor 101, which size is selected as a balance between energy density and ability to withstand the mechanical stress at high speeds (along with the ability to be controlled as part of an SRM). Generally, the mechanical and thermal aspects of the system dictate the dimensions of the system, rather than magnetic limits. The system is generally arranged such that its size (notwithstanding the size of the rotor) is minimised, thereby to provide a system having a small form factor and footprint to improve its usability as part of an array of systems 100.

In use, the rotor can be rotated and act as a flywheel. The evacuation of the casing during manufacture (or after maintenance) leads to very little friction opposing the flywheel rotation. If electrical current is supplied to the pairs of windings in succession, as the rotor rotates, this applies a torque to the rotor causing it to rotate faster. It will be understood that the phasing of the currents supplied to the windings must be synchronised with the rotation of the rotor, so that each pole is attracted to the winding as it approaches it. The input electrical power is hence converted to kinetic energy of the rotating rotor.

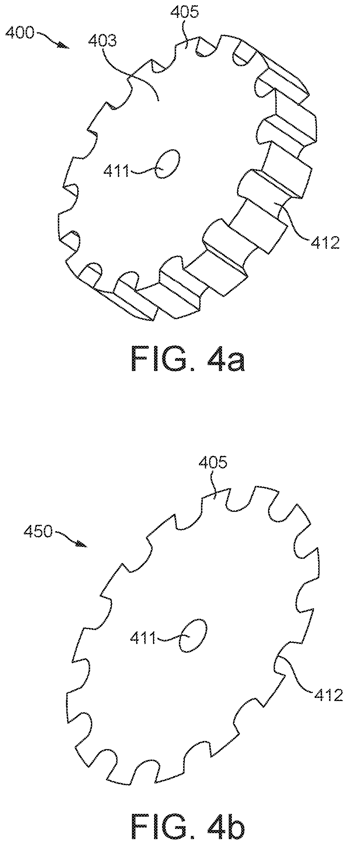

Figure 4a shows an example of a rotor 400 of the system 100. The rotor 400 is a solid body which comprises a plurality of regions 405 protruding from a generally cylindrical body 403, where the protruding regions 405 form the rotor poles. For example, Figure 4 shows 14 rotor poles (suitable for use in an SRM having a 16/14 configuration). Each of the protruding regions corresponds to around 13° of the rotor. The rotor 400 also comprises a plurality of recesses 412 between the protruding regions 405. The rotor 400 also comprises a hole 411 in the centre, configured to receive the axle 103. The rotor has a radius (including the protruding regions 405) of approximately 400 mm, and a width of approximately 165 mm. The hole 411 has a diameter of approximately 80 mm.

The rotor 400 is formed from a plurality of laminations of type 17-7 precipitation hardened steel (chosen for its high strength and hardness, allowing high speed operation). The layers of laminations may serve as a barrier to eddy currents, meaning that eddy currents are restricted to small loops within the thickness of each lamination.

This may reduce the magnitude of any eddy currents substantially, and hence may reduce power loss.

A single lamination 450 is shown in Figure 4b. The lamination has a thickness of less than 1mm, and preferably is approximately 0.4 mm thick. The use of an SRM for large scale flywheel storage would not be feasible using laminations above this thickness as the electromagnetic properties would not be desirable (i.e. eddy currents would become non-negligible).

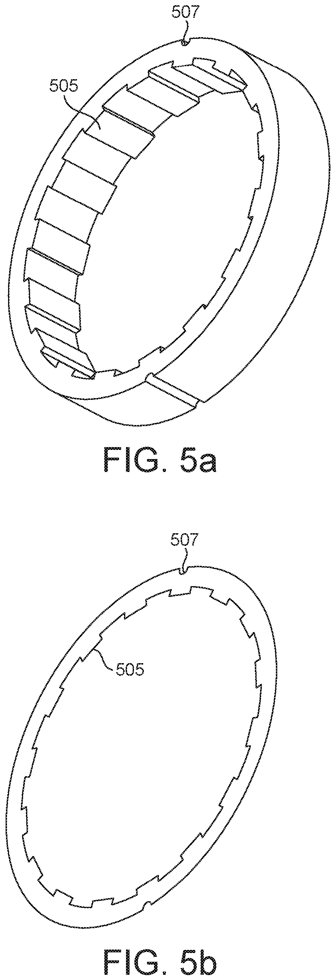

Figure 5a shows an example of a stator 500 of the system. The stator 500 comprises a plurality of protrusions 505, each protrusion having windings around them. When the windings are energised, these form the stator poles. The stator 500 is configured to surround the rotor to allow the rotation of the rotor, while ensuring the poles of the stator are close to the poles of the rotor, allowing for maximum magnetic interaction and hence torque. The stator 500 has an outer radius of approximately 470.6 mm, and an inner radius (i.e. a radius to the inner surface of the stator 500, including the protrusions 505) of approximately 402.6 mm. Each protrusion 505 is approximately 81.2 mm long. The stator 500 has a width of approximately 165 mm, which is the same as the width of the rotor 400.

Like the rotor 400, the stator 500 is formed of a plurality of laminations so as to reduce eddy currents. A single lamination 550 is shown in Figure 5b. Each lamination is under 1 mm thick, and more specifically is approximately 0.35 mm thick. The laminations are formed from maraging steel, specifically M270-35A with an electrical steel coating, such as C3, C5, or C6 ASTM International standard coatings.

The stator 500 also comprises at least one notch 507 on the outer surface (i.e. the outward-facing circumference). The notches are provided to allow the lock the stator to the casing 106 shown in Figure 1. In Figure 5b, there are four notches in the stator 500.

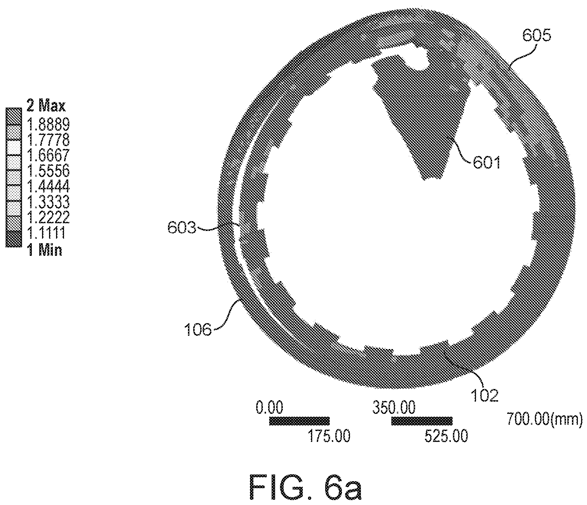

Figure 6a shows simulation results of a section of a rotor 601 which has failed. A solid steel fragment 601 of the rotor 101 which has failed and collided with the stator 102 at an initial angular velocity of 6,000 RPM is shown, causing damage and deformation to the stator 102 and casing 106. For example, a region 605 is shown to be deformed from the plastic strain caused by the rotor collision. This may cause the rotor 101 to contact the stator 102 at other points along its circumference. The stator 102 has also separated from the casing 106, for example at point 603. This damage makes the system highly unsafe, for example large pieces of material may be ejected at high speed.

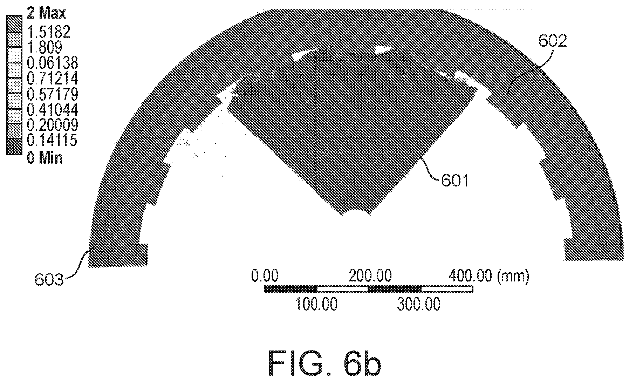

Figure 6b shows simulation results where a rotor 601 is made from a single lamination of thickness 0.35mm, which has failed at an initial angular velocity of 5,000 RPM. The widespread buckling through the rotor 601 and subsequent rupturing appears to have caused little effect on the integrity of the stator 602 or chassis 603. Therefore, the failure of a section of lamination appears not to compromise the safety of the unit - however, the failure of a lamination may unbalance the system.

Accordingly, as well as reducing electrical losses, the use of laminations can improve safety via improved plastic deformation under component failure and a reduction in the likelihood that large components of material are ejected simultaneously. The ability for laminations to deform and lose energy through plastic deformation mechanisms means that the kinetic energy in the system is rapidly reduced to safer levels in the event of failure. Furthermore, the integrity of the rolled steel chassis is less likely to be compromised by a rotor rupture event when laminations are used. The simulation in Figure 6a shows the safety improvements afforded by a laminated construction - a one-piece rotor would deform plastically to a lesser degree, and so would be more likely to rupture the casing 603.

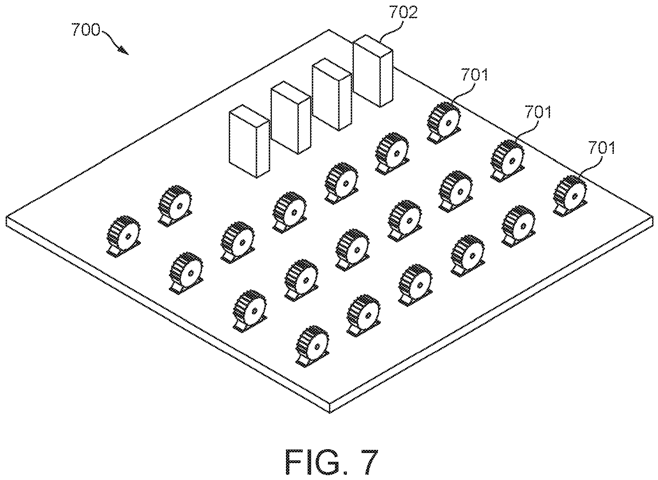

Figure 7 shows an example installation of an array (or "installation") 700 of energy storage systems 701. Each of the energy storage systems 701 may be the energy storage system 100 of Figure 1. The energy storage systems 701 are configured so as to form one unit of a modular array.

Each of the energy storage systems 701 are arranged such that the axis of the motor is aligned horizontally. The small form factor of the systems 701 allows for more efficient arrangement of an array 700 of energy storage systems 701. The energy storage systems 701 are separated by a certain distance for safety reasons. The array 700 consists of 20 systems. It will be appreciated, of course, that various different sizes of arrays may be provided for different purposes.

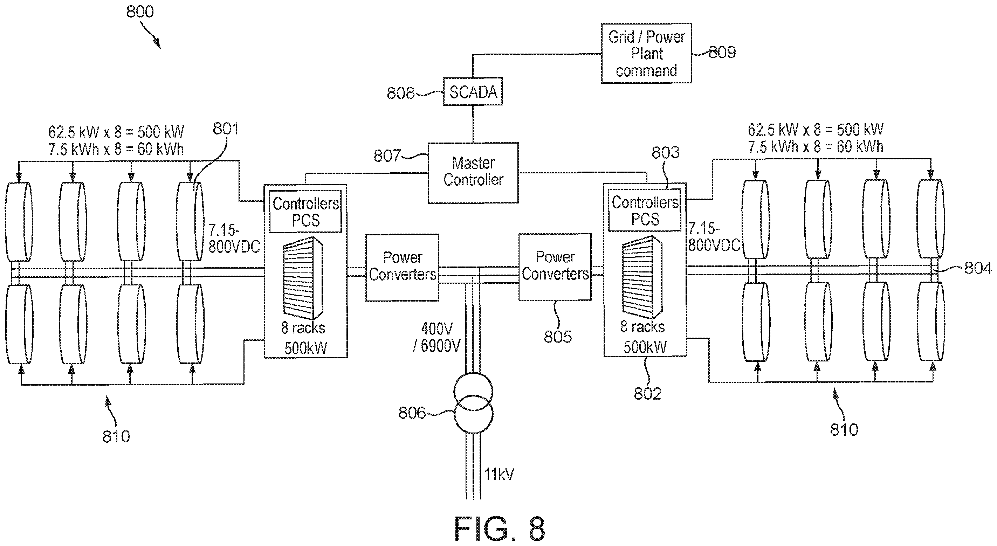

The installation 700 comprises four power electronics units 702. The function of the power electronics units 702 will be described in more detail with reference to Figure 8.

Figure 8 shows an exemplary system diagram of an array 800 of multiple flywheel systems 801 for a 1 MW arrangement (i.e. an array being capable of storing 1 MW). Each flywheel system 801 may be the same as the system 100 shown in Figure 1, and the systems 701 in Figure 7. The array 800 comprises 16 flywheel systems 801, which are split into two sub-arrays 805 comprising 8 flywheel systems 801 each. Each system 801 operates at 62.5 kW, providing a total power of 1 MW for the array 800. The maximum energy stored per system 801 is 7.5 kWh - accordingly, the array 800 stores a maximum of 120 kWh.

Each sub-array 810 is connected to a power electronics unit 802. Each power electronics unit 802 comprises power electronics for each system 801 within the particular sub-array 810. The power electronics unit 802 comprise eight racks, where each rack respectively provides the power electronics for each flywheel system 801 in the sub-array 810.

The flywheel systems 801 are connected to the power electronics unit 802 via a common DC bus 804. The bus voltage is generally between 715 and 800 V for a 1 MW array. Each power electronics unit 802 is connected to a power convertor 805, specifically an active front end (AFE), via the bus 804. The power convertor 805 is capable as acting as an inverter and as a rectifier, so as to transform DC current from the flywheel storage systems 801 to AC current for use in e.g. the electrical grid, and vice versa.

The power convertor 805 is connected directly to a transformer 806 which converts current being exported from the system for onward transmission, and converts energy from the grid into an (AC) form suitable for use with the flywheel systems 801.

Each power electronics unit 802 comprises a controller 803 (such as a PCS "PLC on a Chip" (RTM) controller) which receives communicates data between the flywheel systems 801 in the sub-array 810 and a master controller 807, which receives data from all power electronics units 802 in the array 800 (and hence from all flywheel systems 801 in the array 800). For example, the controller 803 may communicate encoder data back to the master controller 807 or may transmit control commands from the master controller 807 to individual flywheel systems 801. The master controller 807 communicates with a process control system 808, which may use a supervisory control and data acquisition (SCADA) architecture. The process control system 808 receives operator input via a command interface 809. A power plant operator or an electrical grid operator may be able to provide such an input. The described control system allows for the operation of the various flywheel systems to be controlled, for example to change mode between energy input and export, to change particular set points, and to start up or shut down systems. The use of a SCADA architecture allows for multiple arrays 800 to be controlled at once.

Alternatives and Extensions

Although the present system has been principally described for load balancing applications, it will be appreciated that the described system may also be provided in various other configurations. For example, the system may be used in voltage control, load time-shifting, peak avoidance, high power electric vehicle charging support (to allow deferment of network infrastructure upgrades), energy arbitrage, electro-chemical storage support (to prolong the lifetime of such systems), and micro-grid energy management and balancing. In certain applications, the relatively small size and portability of the system may be used to provide flexible load balancing and/or energy storage - for example, a truck-mounted system may be set-up to provide temporary energy storage at any location accessible by truck.

Optionally, the system is set up so as to minimise the effects of the rotation of the Earth on the system. Such rotation causes forces to be applied to the flywheel. To conserve angular momentum, the flywheel will try to resist these forces, which may cause increased load and consequently wear on the bearings. This effect may be mitigated by orientating the system such that the axis of the flywheel is parallel to the rotation of the Earth (i.e. from west to east).

In an alternative, a plurality of systems may be combined (for example, in a 'stack') so as to form a further system comprising a plurality of flywheels. In such a case, certain components (such as power electronics) may be shared across the plurality of systems. Optionally, such a plurality of systems may be integrated within a single outer casing. In one example, an array of systems, for example four, are packaged together into a unit. Each of the flywheel systems within the unit are positioned on the ground at very close proximity. For example, one configuration involves each system arranged one behind the other, such that the axles are substantially aligned. The unit may further comprise a sliding mechanism to allow the systems to project out e.g. for maintenance. This example may be particularly useful for scenarios with very tight spatial constraints such as within buildings.

In an alternative, the casing may comprise at least one coolant channel defining a fluid flow path for a coolant. The coolant may for example be a liquid, being recirculated through a pipe system and cooled down through a heat exchanger. In other examples, the coolant is passed through a radiator to exchange heat with the ambient air; or the coolant may be air; or it may be a recirculated refrigerant fluid that evaporates during passage through the coolant channels.

Optionally, the casing may be coated in a high emissivity paint to increase heat dissipation from the system. Cooling is a substantial problem with this vacuum arrangement, and painting the surface with high emissivity paint can help mitigate this issue. This will help to reduce the temperature of the system through radiation in use, and increase safety by helping prevent overheating and component failure. By cooling through radiation, an active cooling system may also not be required.

It will be further be appreciated that the dimensions and materials described as being used in the system are exemplary, and a variety of other materials and dimensions may be used to achieve at least some of the benefits of the present system. Similarly, it will be appreciated that a suitably adapted version of the system may be configured to operate with a flywheel on a vertical axis, to use bearings other than those described (in particular, magnetic bearings) and/or to use a different SRM configuration (in particular, a 12/10 configuration (using 6-phase) may be used in an alternative). Typically, the number of rotor poles is n, while the number of stator poles is m, where m = n + 2. Preferably, n > 6, more preferably n > 8, still more preferably n >10, yet more preferably still n > 12.

Although the array 800 has generally been described with the power electronics and control componentry being shared between a plurality of flywheel systems 801, it will be appreciated that in an alternative such components may be provided in respect of individual systems, or shared between a greater or lesser number of flywheel systems 801 than described.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

**Claims**

1. An energy storage system (100), comprising:

   a switched reluctance motor comprising a rotor (101) and a stator (102); wherein the rotor (101) is arranged to be capable of acting as a flywheel for storing energy, and wherein the rotor (101) is configured to be rotatable within the stator (102);
   a casing (106) enclosing the rotor (101) and stator (102); wherein the rotor (101) is supported for rotation on the casing (106); and
   a base (109) arranged to support the casing (106);
   wherein the energy storage system (100) is arranged such that, in use, the axis of the rotor (101) is generally horizontal;
   **characterised in that**
   the energy storage system (100) is configured to import electrical energy and convert the electrical energy into kinetic energy stored in the flywheel, and to convert kinetic energy stored in the flywheel to electrical energy and export the electrical energy.

2. An energy storage system (100) according to Claim 1, wherein the casing (106) is generally cylindrical thereby to conform to the shape of the rotor (101) and stator (102).

3. An energy storage system (100) according to any preceding claim, wherein a width of the casing (106) is greater than a depth of the casing (106).

4. An energy storage system (100) according to any preceding claim, wherein the casing (106) is partially recessed into the base (109).

5. An energy storage system (100) according to any preceding claim, wherein a depth of the base (109) does not extend beyond a depth of the casing (106), the depth of the casing (106) being parallel to the axis of the rotor (101).

6. An energy storage system (100) according to any preceding claim, wherein the casing (106) comprises a plurality of fins (108) on an outer surface for assisting heat dissipation.

7. An energy storage system (100) according to any preceding claim, wherein the casing (106) is evacuated for use.

8. An energy storage system (100) according to any preceding claim, wherein the casing (106) has a diameter of between 600 mm and 1,400 mm.

9. An energy storage system (100) according to any preceding claim, wherein the rotor (101) is supported for rotation on an axle (103) which rotates on rolling element bearings (210) provided on the casing (106).

10. An energy storage system (100) according to claim 9, wherein the bearings (210) are deep groove radial hybrid bearings.

11. An energy storage system (100) according to any preceding claim, wherein the rotor (101) comprises more than 6 rotor poles.

12. An energy storage system (100) according to any preceding claim, wherein the switched reluctance motor has a 16/14 configuration.

13. An energy storage system (100) according to any preceding claim, wherein the rotor (101) and stator (102) are each formed from a plurality of laminations (450, 550).

14. An energy storage system (100) according to any preceding claim, wherein at least an outer region (104) of the rotor (101) is made from a ferromagnetic material.

15. An energy storage installation (700), comprising a plurality of energy storage systems (100) according to any preceding claim.

**Patentansprüche**

1. Energiespeichersystem (100), das Folgendes umfasst:

     einen geschalteten Reluktanzmotor, der einen Rotor (101) und einen Stator (102) umfasst; wobei der Rotor (101) so angeordnet ist, dass er fähig ist, als Schwungrad zum Speichern von Energie zu wirken, und wobei der Rotor (101) konfiguriert ist, um innerhalb des Stators (102) drehbar zu sein;
     ein Gehäuse (106), das den Rotor (101) und den Stator (102) umschließt, wobei der Rotor (101) drehbar auf dem Gehäuse (106) getragen wird; und
     eine Basis (109), die so angeordnet ist, dass sie das Gehäuse (106) trägt;
     wobei das Energiespeichersystem (100) so angeordnet ist, dass die Achse des Rotors (101) im Gebrauch im Allgemeinen horizontal ist;

**dadurch gekennzeichnet, dass** das Energiespeichersystem (100) konfiguriert ist, um elektrische Energie zu importieren und die elektrische Energie in kinetische Energie umzuwandeln, die in dem Schwungrad gespeichert wird, und um in dem Schwungrad gespeicherte kinetische Energie in elektrische Energie umzuwandeln und die elektrische Energie zu exportieren.

2. Energiespeichersystem (100) nach Anspruch 1, wobei das Gehäuse (106) im Allgemeinen zylindrisch ist, um sich der Form des Rotors (101) und des Stators (102) anzupassen.

3. Energiespeichersystem (100) nach jedem der vorhergehenden Ansprüche, wobei eine Breite des Gehäuses (106) größer ist als eine Tiefe des Gehäuses (106).

4. Energiespeichersystem (100) nach jedem der vorhergehenden Ansprüche, wobei das Gehäuse (106) teilweise in die Basis (109) eingelassen ist.

5. Energiespeichersystem (100) nach jedem der vorhergehenden Ansprüche, wobei sich eine Tiefe der Basis (109) nicht über eine Tiefe des Gehäuses (106) hinaus erstreckt, wobei die Tiefe des Gehäuses (106) parallel zu der Achse des Rotors (101) ist.

6. Energiespeichersystem (100) nach jedem der vorhergehenden Ansprüche, wobei das Gehäuse (106) eine Vielzahl von Rippen (108) auf einer Außenfläche zur Unterstützung der Wärmeableitung aufweist.

7. Energiespeichersystem (100) nach jedem der vorhergehenden Ansprüche, wobei das Gehäuse (106) zur Verwendung evakuiert wird.

8. Energiespeichersystem (100) nach jedem der vorhergehenden Ansprüche, wobei das Gehäuse (106) einen Durchmesser zwischen 600 mm und 1.400 mm aufweist.

9. Energiespeichersystem (100) nach jedem der vorhergehenden Ansprüche, wobei der Rotor (101) drehbar auf einer Achse (103) gelagert ist, die sich auf Wälzlagern (210) dreht, die auf dem Gehäuse (106) vorgesehen sind.

**10.** Energiespeichersystem (100) nach Anspruch 9, wobei die Lager (210) Rillen-Radial-Hybridlager sind.

**11.** Energiespeichersystem (100) nach jedem der vorhergehenden Ansprüche, wobei der Rotor (101) mehr als 6 Rotorpole aufweist.

**12.** Energiespeichersystem (100) nach jedem der vorhergehenden Ansprüche, wobei der geschaltete Reluktanzmotor eine 16/14-Konfiguration aufweist.

**13.** Energiespeichersystem (100) nach jedem der vorhergehenden Ansprüche, wobei der Rotor (101) und der Stator (102) jeweils aus einer Vielzahl von Lamellen (450, 550) gebildet sind.

**14.** Energiespeichersystem (100) nach jedem der vorhergehenden Ansprüche, wobei zumindest ein äußerer Bereich (104) des Rotors (101) aus einem ferromagnetischen Material hergestellt ist.

**15.** Energiespeicheranlage (70), die eine Vielzahl von Energiespeichersystemen (100) nach jedem der vorhergehenden Ansprüche umfasst.

**Revendications**

**1.** Système de stockage d'énergie (100), comprenant :

un moteur à réluctance commutée comprenant un rotor (101) et un stator (102) ; dans lequel le rotor (101) est conçu pour pouvoir servir de volant d'inertie pour stocker de l'énergie, et dans lequel le rotor (101) est configuré pour pouvoir tourner dans le stator (102) ;
un carter (106) enfermant le rotor (101) et le stator (102) ; dans lequel le rotor (101) est supporté pour tourner sur le carter (106) ; et
une base (109) conçue pour supporter le carter (106) ;
dans lequel le système de stockage d'énergie (100) est conçu de telle sorte que, en utilisation, l'axe du rotor (101) est généralement horizontal ;

**caractérisé en ce que** le système de stockage d'énergie (100) est configuré pour importer de l'énergie électrique et convertir l'énergie électrique en énergie cinétique stockée dans le volant d'inertie, et pour convertir l'énergie cinétique stockée dans le volant d'inertie en énergie électrique et exporter l'énergie électrique.

**2.** Système de stockage d'énergie (100) selon la revendication 1, dans lequel le carter (106) est généralement cylindrique pour épouser ainsi la forme du rotor (101) et du stator (102).

**3.** Système de stockage d'énergie (100) selon l'une quelconque des revendications précédentes, dans lequel une largeur du carter (106) est supérieure à une profondeur du carter (106).

**4.** Système de stockage d'énergie (100) selon l'une quelconque des revendications précédentes, dans lequel le carter (106) est partiellement encastré dans la base (109).

**5.** Système de stockage d'énergie (100) selon l'une quelconque des revendications précédentes, dans lequel une profondeur de la base (109) ne s'étend pas au-delà d'une profondeur du carter (106), la profondeur du carter (106) étant parallèle à l'axe du rotor (101).

**6.** Système de stockage d'énergie (100) selon l'une quelconque des revendications précédentes, dans lequel le carter (106) comprend une pluralité d'ailettes (108) sur une surface externe pour faciliter la dissipation de chaleur.

**7.** Système de stockage d'énergie (100) selon l'une quelconque des revendications précédentes, dans lequel le carter (106) est mis sous vide pour utilisation.

**8.** Système de stockage d'énergie (100) selon l'une quelconque des revendications précédentes, dans lequel le carter (106) a un diamètre compris entre 600 mm et 1,400 mm.

**9.** Système de stockage d'énergie (100) selon l'une quelconque des revendications précédentes, dans lequel le rotor (101) est supporté pour tourner sur un axe (103) qui tourne sur des roulements à éléments roulants (210) prévus sur le carter (106).

**10.** Système de stockage d'énergie (100) selon la revendication 9, dans lequel les roulements (210) sont des roulements hybrides radiaux à gorge profonde.

**11.** Système de stockage d'énergie (100) selon l'une quelconque des revendications précédentes, dans lequel le rotor (101) comprend plus de 6 pôles de rotor.

**12.** Système de stockage d'énergie (100) selon l'une quelconque des revendications précédentes, dans lequel le moteur à réluctance commutée a une configuration 16/14.

**13.** Système de stockage d'énergie (100) selon l'une quelconque des revendications précédentes, dans lequel le rotor (101) et le stator (102) sont chacun formés à partir d'une pluralité de tôles (450, 550).

**14.** Système de stockage d'énergie (100) selon l'une quelconque des revendications précédentes, dans lequel au moins une région externe (104) du rotor (101) est réalisée en un matériau ferromagnétique.

**15.** Installation de stockage d'énergie (700), comprenant une pluralité de systèmes de stockage d'énergie (100) selon l'une quelconque des revendications précédentes.

FIG. 1

FIG. 2a

FIG. 2b

FIG. 3

FIG. 4a

FIG. 4b

507

505

FIG. 5a

507

505

FIG. 5b

FIG. 6a

FIG. 6b

FIG. 7

FIG. 8

EP 3 853 963 B1

**EP 3 853 963 B1**

**Patent documents cited in the description**

- WO 2016191686 A1
- WO 9507193 A1
- US 201410652 A1